# EUROPEAN PATENT APPLICATION

(11) **EP 2 006 854 A1**
(43) Date of publication of application: **24.12.2008**
(21) Application number: 07741576.8
(22) Date of filing: 13.04.2007
(51) Int. Cl.: G11B 20/10, G11B 7/005, G11B 27/00, H04N 5/85

(54) **INFORMATION REPRODUCING DEVICE AND METHOD, AND COMPUTER PROGRAM**

(30) Priority: 13.04.2006 JP 2006111228
(71) Applicant: Pioneer Corporation, Tokyo 153-8654 (JP)
(72) Inventor: SAWABE, Takao, Tokorozawa-shi Saitama 359-8522 (JP)
(74) Representative: Viering, Jentschura & Partner
(86) International application number: PCT/JP2007/058140
(87) International publication number: WO 2007/119813

(57) **Abstract**

An information reproducing apparatus (200) is provided with: a reproducing device (202, 205, 206) for reproducing record information recorded on an information recording medium (100) which is provided with a first recording layer (L0) to which first medium region information (110) is assigned and a second recording layer (L1) to which second medium region information (120) is assigned; a storing device (209) for storing apparatus region information (230); a judging device (207) for judging whether or not the second medium region information matches the apparatus region information if the first medium region information does not match the apparatus region information; and a controlling device (207) for controlling the reproducing device to reproduce the record information recorded in the second recording layer if it is judged that the second medium region information matches the apparatus region information.

## Description

### Technical Field

The present invention relates to an information reproducing apparatus and method, such as a DVD player and a Blu-ray Disc player, and a computer program which makes a computer function as such an information reproducing apparatus.

### Background Art

A region code for restricting a reproducible area of recorded contents is assigned to a DVD. Specifically, the world is divided into six regions (or seven regions if an airplane is considered to be one region), and a unique region code to each region is defined. One or a plurality of region codes are assigned to a DVD. Moreover, one region code is assigned to a DVD player for reproducing the DVD. Then, only if the region code assigned to the DVD matches the region code assigned to the DVD player, the DVD player can reproduce the contents recorded on the DVD. For example, a region code "2" is assigned to both the DVD and the DVD player which are sold in Japan. Thus, the contents recorded on the DVD sold in Japan can be reproduced by using the DVD player sold in Japan. On the other hand, a region code "1" is assigned to the DVD sold in America. Thus, the contents recorded on the DVD sold in America cannot be reproduced by using the DVD player sold in Japan. Such DVD reproduction control is referred to as RPC (Region Playback Control) (refer to a patent document 1).

By the way, recently, the development of a Blu-ray Disc which has a larger recording capacity than that of the DVD has proceeded. In the Blu-ray Disc, a blue laser beam is used for data recording and reproduction, and the recording capacity reaches about 25GB in the Blu-ray Disc with a single recording layer, and about 50GB in the Blu-ray Disc with two recording layers. Thus, the Blu-ray Disc is in the limelight as a next-generation optical disc which can record HD (High Definition) contents or audio contents of various types, or which can add various reproduction functions.
Patent document 1: Japanese Patent Application Laid Open NO. Hei 11-110914

### Disclosure of Invention

### Subject to be Solved by the Invention

Even for the Blu-ray Disc, it can be anticipated that the RPC is introduced, as in the DVD. At this time, an aspect of region division for assigning the region code in the Blu-ray Disc does not necessarily match the aspect of region division for assigning the region code in the DVD. That is, an aspect of assigning the region code in the Blu-ray Disc does not necessarily match the aspect of assigning the region code in the DVD.

On the other hand, there is a possibility to develop a hybrid type optical disc later in which a recording layer according to the DVD standard (hereinafter referred to as a "DVD layer" as occasion demands) and a recording layer according to the Blu-ray Disc standard (hereinafter referred to as a "Blu-ray Disc layer" as occasion demands) are laminated. In such a hybrid type optical disc, an individual region code is assigned to each of the DVD layer and the Blu-ray Disc layer. More specifically, the region code is assigned to the DVD layer in accordance with the assignment of the region code in the DVD, and the region code is assigned to the Bly-ray Disc layer in accordance with the assignment of the region code in the Bly-ray Disc.

However, as described above, the aspect of assigning the region code in the Blu-ray Disc does not necessarily match the aspect of assigning the region code in the DVD. In this case, the region code assigned to the DVD layer does not necessarily match the region code assigned to the Blu-ray Disc layer. Thus, either the contents recorded in the DVD layer or the contents recorded in the Blu-ray Disc layer cannot be reproduced on the player to which only one region code is assigned. In particular, if the player judges that it cannot reproduce the contents recorded in the BD layer, there is a possibility that the player ends a reproduction operation. That is, there is such a technical problem that the reproduction operation is likely ended with reference only to the region code assigned to the BD layer, even if the reproduction of the contents recorded in the DVD layer can be performed.

This significantly reduces the availability of the hybrid type optical disc, which is not preferable.

In view of the aforementioned problems, it is therefore an object of the present invention to provide an information reproducing apparatus and method, which preferably allows the reproduction on the hybrid type information recording medium provided with a plurality of types of recording layer to each of which a region code is assigned, and a computer program which makes a computer function as such an information reproducing apparatus.

### Means for Solving the Subject

### (Information Reproducing Apparatus)

The above object of the present invention can be achieved by an information reproducing apparatus provided with: a reproducing device for reproducing record information recorded on an information recording medium, the information recording medium provided with a first recording layer (e.g. BD layer described later) to which first medium region information is assigned and a second recording layer (e.g. DVD layer described later) to which second medium region information is assigned; a storing device for storing apparatus region information; a first judging device for judging whether or not the second medium region information matches the apparatus region information if the first medium region information does not match the apparatus region information; and a first controlling device for controlling the reproducing device to reproduce the record information recorded in the second recording layer if it is judged that the second medium region information matches the apparatus region information.

According to the information reproducing apparatus of the present invention, the record information recorded on the information recording medium is reproduced by the operation of the reproducing device. In the information recording medium of the present invention, the first recording layer and the second recording layer are laminated, in each of which the record information is recorded. The first recording layer and the second recording layer are preferably recording layers having different standards (e.g. recording layers having different recording capacities); however, they may be recording layers of the same standard. To the first recording layer, the first medium region information according to the standard of the first recording layer is assigned. On the other hand, to the second recording layer, the second medium region information according to the standard of the second recording layer is assigned. Moreover, the reproducing apparatus of the present invention is provided with a storing device for storing the apparatus region information. Each of the first medium region information and the second medium region information is used for the RPC.

In particular, in the present invention, by the operation of the first judging device, it is judged whether or not the second medium region information matches the apparatus region information (i.e. whether or not the record information recorded in the second recording layer can be reproduced) if the first medium region information assigned to the first recording layer does not match the apparatus region information (i.e. if the record information recorded in the first recording layer cannot be reproduced). As a result of the judgment by the first judging device, if it is judged that the second medium region information matches the apparatus region information, the reproducing device is controlled to reproduce the record information recorded in the second recording layer, by the operation of the first controlling device. As a result, the record information recorded in the second recording layer is reproduced.

As described above, according to the information reproducing apparatus of the present invention, even if the record information recorded in the first recording layer cannot be reproduced because the first medium region information does not match the apparatus region information, the record information recorded in the second recording layer can be reproduced by further judging whether or not the second medium region information matches the apparatus region information. Thus, it is possible to preferably eliminate such a disadvantage that the reproduction operation is ended due to the fact that the first medium region information does not match the apparatus region information. By this, it is possible to preferably eliminate such a disadvantage that the record information recorded on the information recording medium cannot be reproduced at all.

As explained above, according to the information reproducing apparatus of the present invention, it is possible to preferably perform the reproduction on the hybrid type information recording medium provided with the plurality of types of recording layer to each of which the medium region information is assigned.

In one aspect of the information reproducing apparatus of the present invention, it is further provided with: a second judging device for judging whether or not the first medium region information matches the apparatus region information; and a second controlling device for controlling the reproducing device to reproduce the record information recorded in the first recording layer if it is judged that the first medium region information matches the apparatus region information.

According to this aspect, if the first medium region information matches the apparatus region information, it is possible to reproduce the record information recorded in the first recording layer.

In an aspect of the information reproducing apparatus provided with the second judging device and the second controlling device, as described above, the first judging device may judge whether or not the second medium region information matches the apparatus region information after the second judging device judges whether or not the first medium region information matches the apparatus region information.

By virtue of such construction, if the record information recorded in the first recording layer cannot be reproduced, it is judged whether or not the record information recorded in the second recording layer can be reproduced. That is, if the record information recorded in the first recording layer can be reproduced, the record information recorded in the first recording layer is reproduced, and if the record information recorded in the first recording layer cannot be reproduced, it is judged whether or not the record information recorded in the second recording layer can be reproduced. By this, it is possible to preferably reproduce the record information recorded on the information recording medium.

In an aspect of the information reproducing apparatus provided with the second judging device and the second controlling device, as described above, the second judging device may be realized by that a program recorded on the information recording medium is executed on the information reproducing apparatus.

By virtue of such construction, by executing the program recorded on the information recording medium, it is judged whether or not the first medium region information matches the apparatus region information, and if it is judged that the first medium region information matches the apparatus region information, the reproducing device is controlled to reproduce the record information recorded in the first recording layer.

In another aspect of the information reproducing apparatus of the present invention, a plurality of first medium region information is assigned to the first recording layer, a plurality of second medium region information is assigned to the second recording layer, the first judging device judges whether or not at least one of the plurality of second medium region information matches the apparatus region information if each of the plurality of first medium region information does not match the apparatus region information, and the first controlling device controls the reproducing device to reproduce the record information recorded in the second recording layer if it is judged that at least one of the plurality of second medium region information matches the apparatus region information.

According to this aspect, it is possible to receive the aforementioned various effects even if the plurality of region information is assigned to one recording layer.

In another aspect of the information reproducing apparatus of the present invention, the information reproducing apparatus is further provided with an instructing device for giving an instruction of whether or not to reproduce the record information recorded in the second recording layer if it is judged that the second medium region information matches the apparatus region information, and the first controlling device controls the reproducing device to reproduce the record information recorded in the second recording layer if an instruction to reproduce the record information recorded in the second recording layer is given

According to this aspect, if the instruction to reproduce the record information recorded in the second recording layer is given, the record information recorded in the second recording layer is reproduced. For example, if the record information recorded in the first recording layer cannot be reproduced, a display screen indicating it is presented to a user, and if the user uses the instructing device and gives an instruction indicating that the user wants to reproduce the record information recorded in the second recording layer, the record information recorded in the second recording layer is reproduced. By this, it is possible to reproduce the record information recorded on the information recording medium in a user's desired aspect, for example.

### (Information Reproducing Method)

The above object of the present invention can be also achieved by an information reproducing method in an information reproducing apparatus provided with: a reproducing device for reproducing record information recorded on an information recording medium, the information recording medium provided with a first recording layer to which first medium region information is assigned and a second recording layer to which second medium region information is assigned; and a storing device for storing apparatus region information, the information reproducing method provided with: a first judging process of judging whether or not the second medium region information matches the apparatus region information if the first medium region information does not match the apparatus region information; and a first controlling process of controlling the reproducing device to reproduce the record information recorded in the second recording layer if it is judged that the second medium region information matches the apparatus region information.

According to the information reproducing method of the present invention, it is possible to receive the same various benefits as those of the aforementioned information reproducing apparatus of the present invention.

Incidentally, in response to the various aspects of the aforementioned information reproducing apparatus of the present invention, the information reproducing method of the present invention can also adopt various aspects.

### (Computer Program)

The above object of the present invention can be also achieved by a computer program for reproduction control to control a computer provided for the aforementioned information reproducing apparatus of the present invention (including its various aspects), the computer program making the computer function as at least one portion of the first judging device and the first controlling device.

According to the computer program of the present invention, the aforementioned information reproducing apparatus of the present invention can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

Incidentally, in response to the various aspects of the aforementioned information reproducing apparatus of the present invention, the computer program of the present invention can adopt various aspects.

The above object of the present invention can be also achieved by a computer program product in a computer-readable medium for tangibly embodying a program of instructions executable by a computer provided for the aforementioned information reproducing apparatus of the present invention (including its various aspects), the computer program product making the computer function as at least one portion of the first judging device and the first controlling device.

According to the computer program product of the present invention, the aforementioned information reproducing apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned information reproducing apparatus of the present invention.

These effects and other advantages of the present invention will become more apparent from the embodiments explained below.

As explained above, according to the information reproducing apparatus of the present invention, it is provided with the reproducing device, the storing device, the first judging device, and the first controlling device. According to the information reproducing method of the present invention, it is provided with the first judging process and the first controlling process. According to the computer program of the present invention, it makes a computer function as at least one portion of the first judging device and the first controlling device. Therefore, it is possible to preferably perform the reproduction on the hybrid type information recording medium provided with a plurality of types of recording layer to each of which a region code is assigned, for example.

### Brief Description of Drawings

[FIG. 1] FIGs. 1 are a schematic plan view showing the basic structure of an optical disc in an embodiment and a schematic cross sectional view showing the optical disc.
[FIG. 2] FIG. 2 is a block diagram conceptually showing the basic structure of an information reproducing apparatus in an embodiment.
[FIG. 3] FIG. 3 is a flowchart conceptually showing a flow of the operation of the information reproducing apparatus in the embodiment.
[FIG. 4] FIGs. 4 are tables showing specific examples of a BD region code, a DVD region code, and an equipment region code.

### Description of Reference Codes

- 100: optical disc
- 110: BD region code
- 120: DVD region code
- 200: information reproducing apparatus
- 202: pickup
- 205: DVD reproduction device
- 206: BD reproduction device
- 230: equipment region code
- L0: BD layer
- L1: DVD layer

### Best Mode for Carrying Out the Invention

Hereinafter, the best mode for carrying out the present invention will be explained in each embodiment in order with reference to the drawings.

### (1) Information recording medium

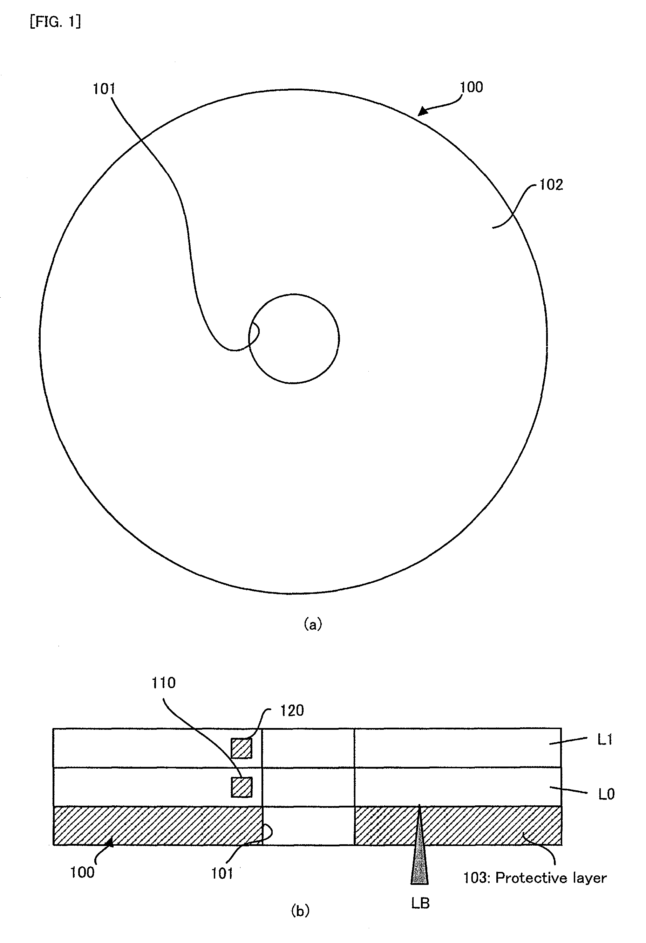

Firstly, with reference to FIGs. 1, an explanation will be given on an optical disc 100 as an embodiment of the information recording medium on which reproduction is performed by an embodiment of the information reproducing apparatus of the present invention. FIG. 1(a) is a schematic plan view showing the basic structure of the optical disc 100 in the embodiment, and FIG. 1(b) is a schematic cross sectional view showing the optical disc 100.

As shown in FIG. 1(a), the optical disc 100 has a recording area 102 formed around a center hole 101, on a disc main body with a diameter of about 12cm, as in a DVD, for example. The recording area 102 may be provided with a lead-in area or a lead-out area, a user data area, and a middle area, centered on the center hole 101.

In particular, the optical disc 100 in the embodiment, as shown in FIG. 1(b), has such a structure that a BD (Blu-ray Disc) layer L0 and a DVD layer L1 are laminated, wherein the BD layer L0 constitutes one specific example of the "first recording layer" of the present invention, and the DVD layer L1 constitutes one specific example of the "second recording layer" of the present invention. The surface of the BD layer L0 is protected by a protective layer 103. In the recording / reproduction of such a dual-layer type optical disc 100, the reproduction of the data recorded in the BD layer L0 is performed, or the reproduction of the data recorded in the DVD layer L1 is performed, in accordance with on which recording layer a focal position of a laser beam LB is focused, wherein the laser beam LB is irradiated from the lower side to the upper side in FIG. 1(b).

The BD layer L0 is a recording layer according to the Blu-ray Disc standard (hereinafter referred to as the "BD standard" as occasion demands), and about 25GB data can be recorded therein. In the BD layer L0, a recording film is formed in a position of about 0.1mm from the surface of the optical disc 100. In the BD layer L0, a BD region code 110 according to the BD standard is recorded. The BD region code 110 constitutes one specific example of the "first medium region information" of the present invention.

The DVD layer L1 is a recording layer according to the DVD standard, and about 4.7GB data can be recorded therein. In the DVD layer L1, a recording film is formed in a position of about 0.6mm from the surface of the optical disc 100. In the DVD layer L1, a DVD region code 120 according to the DVD standard is recorded. The DVD region code 120 constitutes one specific example of the "second medium region information" of the present invention.

Incidentally, it will be understood that the recording layer provided for the optical disc 100 is not limited to the BD layer L0 and the DVD layer L1 described above. For example, it may be an optical disc provided with either the BD layer L0 or the DVD layer L1 described above, and a recording layer according to a different standard from the BD standard and the DVD standard. Alternatively, it may be an optical disc provided with two recording layers according to a different standard from the BD standard and the DVD standard. However, if the optical disc 100 is provided with the recording layer according to a different standard from the BD standard and the DVD standard, a region code according to the different code is preferably recorded in the recording layer.

Moreover, it may be an optical disc provided with two or more recording layers. For example, it may be an optical disc on which the two or more BD layers L0 are laminated, an optical disc on which the two or more DVD layers L1 are laminated, or an optical disc on which two or more recording layers other than the BD layer and the DVD layer are laminated. Moreover, it may be an optical disc on which one or a plurality of BD layers L0, one or a plurality of DVD layers L1, and one or a plurality of recording layers other than the BD layer and the DVD layer are laminated, as occasion demands.

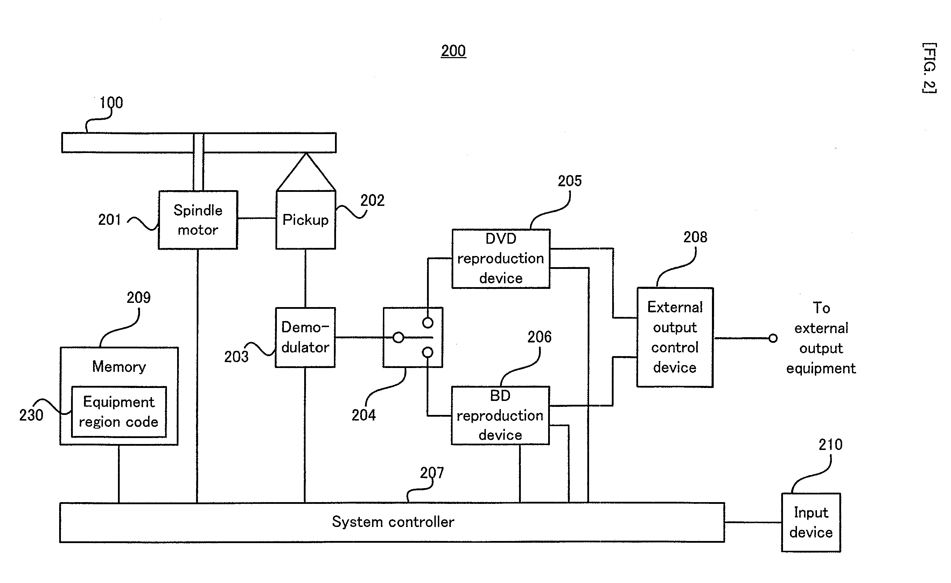

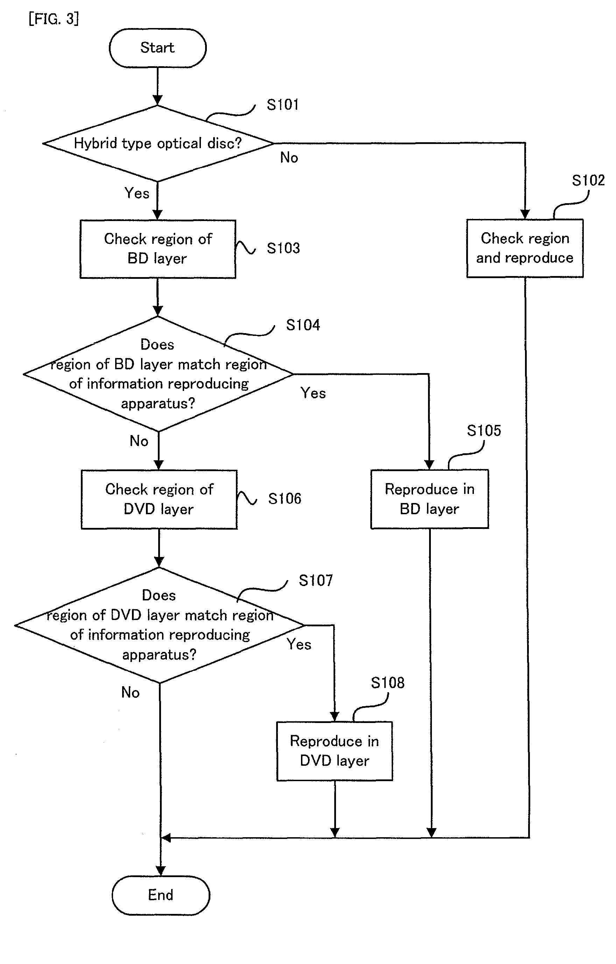

Incidentally, as an optical disc on which reproduction is performed by an information reproducing apparatus 200 in this embodiment described later (refer to FIG. 2), an optical disc provided with a plurality of recording layers according to different standards (i.e. the optical disc 100 of a so-called hybrid type, explained using FIG. 1), an optical disc provided with a plurality of recording layers according to the same standard, and an optical disc provided with a single recording layer are listed as one specific example. Moreover, in particular, in the case where the optical disc provided with a plurality of recording layers according to different standards is reproduced, it is possible to receive effects detailed below, by performing operations detailed below (refer to FIG. 3).

### (2) Basic structure of information reproducing apparatus

Next, with reference to FIG. 2, an explanation will be given on the basic structure of an information reproducing apparatus 200 in the embodiment. FIG. 2 is a block diagram conceptually showing the basic structure of the information reproducing apparatus 200 in the embodiment.

As shown in FIG. 2, the information reproducing apparatus 200 is provided with: a spindle motor 201; a pickup 202; a demodulator 203; a switch 204; a DVD reproduction device 205; a BD reproduction device 206; a system controller 207; an external output control device 208; a memory 209; and an input device 210.

The spindle motor 201 is intended to rotate and stop the optical disc 100, and operates in accessing the optical disc 100. More specifically, the spindle motor 201 is adapted to rotate the optical disc 100 at a predetermined speed and stop it, under spindle servo by a not-illustrated spindle servo unit or the like.

The pickup 202 is provided with a semiconductor laser apparatus, a collimator lens, an objective lens or the like, which are not illustrated, in order to reproduce the data recorded on the optical disc 100. More specifically, the optical pickup 202 irradiates the optical disc 100 with the light beam LB with a predetermined power, and receives reflective light of the laser beam LB. A light receiving signal according to the received reflective light is outputted to the demodulator 203.

In particular, the pickup 202 focus the laser beam LB on the BD layer L0 in reproducing the data recorded in the BD layer L0. In the same manner, the pickup 202 focus the laser beam LB on the DVD layer L1 in reproducing the data recorded in the DVD layer L1. This operation is performed by receiving focus servo from a not-illustrated focus servo unit or the like.

The demodulator 203 performs a demodulation process on the light receiving signal outputted from the pickup 202, to thereby generate a reading signal, and outputs the reading signal to the DVD reproduction device 205 or the BD reproduction device 206 through the switch 204. Moreover, the demodulator 203 outputs the reading signal to the not-illustrated spindle servo unit or focus servo unit or the like. The spindle servo unit or the focus servo unit generates spindle servo or focus servo, on the basis of the reading signal.

The switch 204 switches the output destination of the reading signal outputted from the demodulator 203. Specifically, in reproducing the data recorded in the BD layer L0, the switch 204 switches the output destination to the BD reproduction device 206 so that the reading signal outputted from the demodulator 203 is outputted to the BD reproduction device 206. On the other hand, in reproducing the data recorded in the DVD layer L1, the switch 204 switches the output destination to the DVD reproduction device 205 so that the reading signal outputted from the demodulator 203 is outputted to the DVD reproduction device 205.

The DVD reproduction device 205 performs a decoding process or the like according to the DVD standard, with respect to the reading signal inputted from the demodulator 203 through the switch 204, to thereby generate a reproduction signal. The generated reproduction signal is outputted to the external output control device 208.

The BD reproduction device 206 performs a decoding process or the like according to the BD standard, with respect to the reading signal inputted from the demodulator 203 through the switch 204, to thereby generate a reproduction signal. The generated reproduction signal is outputted to the external output control device 208.

Incidentally, a combination of the pickup 202, the demodulator 203, the DVD reproduction device 205, and the BD reproduction device 206 constitutes one specific example of the "reproducing device" of the present invention.

The system controller 207 is connected through a data bus to the spindle motor 201, the pickup 202, the demodulator 203, the switch 204, the DVD reproduction device 205, the BD reproduction device 206, the external output control device 208, the memory 209, and the input device 210. The system controller 207 gives instructions to various control devices, to thereby control the entire information reproducing apparatus 200. Normally, software or firmware for operating the system controller 207 is stored in the memory 209.

The external output control device 208 outputs the reproduction signal outputted from the DVD reproduction device 205 and the BD reproduction device 206, to external output equipment, such as a display and a speaker. By this, video images and sounds or the like recorded on the optical disc 100 are reproduced on the external output equipment, such as a display and a speaker.

The memory 209 is used in the general data processing on the information reproducing apparatus 200, including a buffer area for the reproduction data, an area used as an intermediate buffer when data is converted into the data that can be used on the information reproducing apparatus 200, and the like. Moreover, the memory 209 is provided with: a Read Only Memory (ROM) area in which a program (i.e .firmware) for performing an operation as the information reproducing apparatus 200 is stored; a Random Access Memory (RAM) area in which the reproduction data is temporarily stored or in which a parameter required for the operation of the firmware program or the like is stored; and the like.

Moreover, the memory 209 stores an equipment region code 230 which is assigned to the information reproducing apparatus 200 in accordance with the DVD standard or the BD standard. More specifically, the memory 209 stores an equipment region code 230a according to the BD standard (hereinafter referred to as a "BD equipment region code" as occasion demands) and an equipment region code 230b according to the DVD standard (hereinafter referred to as a "DVD equipment region code" as occasion demands). Of course, if it is considered that the information reproducing apparatus 200 loads an optical disc provided with the recording layer(s) other than the BD layer L0 and the DVD layer L1, it is preferable to store an equipment region code according to the standard for recording layer(s) other than the BD layer L0 and the DVD layer L1. Incidentally, the equipment region code 230 constitutes one specific example of the "apparatus region information" of the present invention.

The input device 210 constitutes one specific example of the "instructing device" of the present invention. The input device 210 includes, for example, a remote controller, a touch panel, an operation button, a keyboard, a mouse, or the like, and inputs an instruction from the exterior of the information reproducing apparatus 200, to the information reproducing apparatus 200.

### (3) Operation principle of information reproducing apparatus

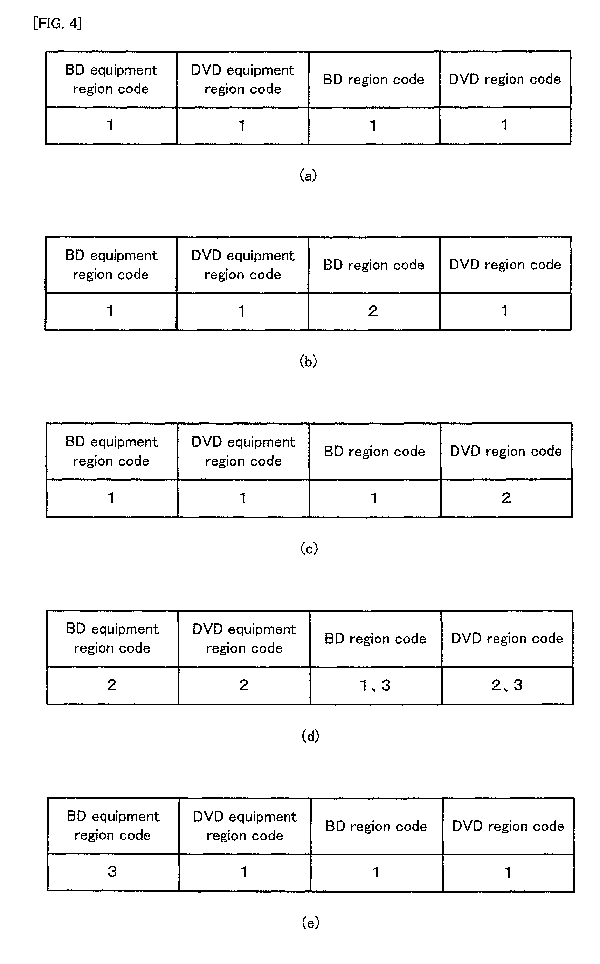

Next, with reference to FIG. 3 and FIGs. 4, an explanation will be given on the operation principle of the information reproducing apparatus 200 in the embodiment. FIG. 3 is a flowchart conceptually showing a flow of the operation of the information reproducing apparatus 200 in the embodiment. FIGs. 4 are tables showing specific examples of the BD region code 110, the DVD region code 120, and the equipment region code 230.

Incidentally, the information reproducing apparatus 200 in the embodiment adopts such construction that the data recorded in the BD layer L0 is reproduced more preferentially than the data recorded in another recording layer is if the loaded optical disc is provided with the BD layer L0.

As shown in FIG. 3, firstly, it is judged whether or not the optical disc loaded on the information reproducing apparatus 200 is the hybrid type optical disc 100 (i.e. the optical disc 100 shown in FIG. 1) (step S101).

Specifically, the information reproducing apparatus 200 firstly judges whether or not the loaded optical disc is provided with the BD layer L0. For example, the laser beam LB is focused on the position of 0.1mm from the surface of the loaded optical disc, and then it is judged whether or not there is the recording layer in the position of 0.1mm from the surface of the optical disc on the basis of the reflective light of the laser light LB. If there is the recording layer in the position of 0.1mm from the surface of the optical disc, it can be judged that the optical disc is provided with the BD layer L0. Alternatively, the information reproducing apparatus 200 may judge whether or not the optical disc is provide with the BD layer L0, by irradiating the optical disc with the laser beam LB while opening focus servo and in accordance with the position of an S curve which appears in a focus error signal generated from the reflective light of the laser beam LB. If the S curve which appears in the focus error signal appears in the position of 0.1mm from the surface of the optical disc, it can be judged that the optical disc is provided with the BD layer L0.

After that, if it is judged that the optical disc is provided with the BD layer L0, disc type data recorded in the BD layer L0 is read. By this, it can be judged whether or not the loaded optical disc is the hybrid type optical disc 100. The disc type data includes data which directly or indirectly indicates whether or not the loaded optical disc is the hybrid type optical disc 100.

As a result of the judgment in the step S101, if it is judged that the loaded optical disc is not the hybrid type optical disc 100 (the step S101: No), it can be recognized that the loaded optical disc is an optical disc provided with a plurality of recording layers according to the same standard, or an optical disc provided with a single recording layer. Specifically, it can be recognized that the loaded optical disc is an optical disc provided with a plurality of BD layers L0, an optical disc provided with a single BD layer L0, an optical disc provided with a plurality of DVD layers L1, or an optical disc provided with a signal DVD layer L1.

Therefore, it is judged that the region code recorded in at least one of the plurality of recording layers or the single recording layer matches the equipment region code 230 (specifically, the equipment region code according to the standard of the recording layer), and then if the former matches the latter, the data recorded on the optical disc is reproduced (step S102).

On the other hand, as a result of the judgment in the step S101, if it is judged that the loaded optical disc is the hybrid type optical disc 100 (the step S101: Yes), then, the BD region code 110 recorded in the BD layer L0 is obtained (step S103).

After that, under the control of the system controller 207 which constitutes one specific example of the "second judging device" of the present invention (or, as described later, under the control of a program operating on the system controller 207), it is judged whether or not the BD region code 110 obtained in the step S103 matches the equipment region code 230 (specifically, the BD equipment region code 230a) (step S104).

As a result of the judgment in the step S104, if it is judged that the BD region code 110 matches the BD equipment region code 230a (the step S104: Yes), the data recorded in the BD layer L0 is reproduced, under the control of the system controller 207 which constitutes one specific example of the "second controlling device" of the present invention (or, as described later, under the control of the program operating on the system controller 207) (step S105).

Incidentally, the operations in the steps S103, S104, and S105 may be performed by that a predetermined program recorded on the optical disc 100 operates on the system controller 207. That is, the predetermined program recorded on the optical disc 100 may mainly allow the operations in the steps S103, S104, and S105 to be performed.

On the other hand, as a result of the judgment in the step S104, if it is judged that the BD region code 110 does not matches the BD equipment region code 230a (the step S104: No), then, the DVD region code 120 recorded in the DVD layer L1 is obtained (step S106).

After that, under the control of the system controller 207 which constitutes one specific example of the "first judging device" of the present invention, it is judged whether or not the DVD region code 120 obtained in the step S106 matches the equipment region code 230 (specifically, the DVD equipment region code 230b) (step S107).

As a result of the judgment in the step S107, if it is judged that the DVD region code 120 matches the DVD equipment region code 230b (the step S107: Yes), the data recorded in the DVD layer L1 is reproduced, under the control of the system controller 207 which constitutes one specific example of the "first controlling device" of the present invention (step S108).

On the other hand, as a result of the judgment in the step S107, if it is judged that the DVD region code 120 does not matches the DVD equipment region code 230b (the step S107: No), the reproduction operation is not performed on the optical disc 100. In this case, a warning screen which indicates that the region code is mismatched may be displayed.

Next, the operation of the information reproducing apparatus 200 in the embodiment will be explained, with specific region codes shown.

As shown in FIG. 4(a), an explanation is given on the case where the BD equipment region code 230a is "1", the DVD equipment region code 230b is "1", the BD region code 110 is "1", and the DVD region code 120 is "1". In this case, since it is judged that the BD equipment region code 230a matches the BD region code 110, the data recorded in the BD layer L0 is reproduced.

However, since the DVD equipment region code 230b matches the DVD region code 120, the data recorded in the DVD layer L1 may be reproduced if a user's instruction is given or in similar cases.

As shown in FIG. 4(b), an explanation is given on the case where the BD equipment region code 230a is "1", the DVD equipment region code 230b is "1", the BD region code 110 is "2", and the DVD region code 120 is "1". In this case, since it is judged that the BD equipment region code 230a does not match the BD region code 110, the data recorded in the BD layer L0 is not reproduced. After it is judged that the BD equipment region code 230a does not match the BD region code 110, it is judged that the DVD equipment region code 230b matches the DVD region code 120. Thus, the data recorded in the DVD layer L1 is reproduced.

As shown in FIG. 4(c), an explanation is given on the case where the BD equipment region code 230a is "1", the DVD equipment region code 230b is "1", the BD region code 110 is "1", and the DVD region code 120 is "2". In this case, since it is judged that the BD equipment region code 230a matches the BD region code 110, the data recorded in the BD layer L0 is reproduced.

Moreover, since the DVD equipment region code 230b does not match the DVD region code 120, the data recorded in the DVD layer L1 is not reproduced even if a user's instruction is given or in similar cases.

Incidentally, a plurality of BD region codes 110 may be recorded in the BD layer L0. In the same manner, a plurality of DVD region codes 120 may be recorded in the DVD layer L1. In this case, if it is judged that the BD equipment region code 230a matches at least one of the plurality of BD region codes 110, the data recorded in the BD layer L0 is reproduced. If it is judged that the BD equipment region code 230a does not match each of the plurality of BD region codes 110, it is judged whether or not the DVD equipment region code 230b matches at least one of the plurality of DVD region codes 120. If it is judged that the DVD equipment region code 230b matches at least one of the plurality of DVD region codes 120, the data recorded in the DVD layer L1 is reproduced. On the other hand, if it is judged that the DVD equipment region code 230b does not match each of the plurality of DVD region codes 120, the reproduction operation is ended.

For example, as shown in FIG. 4(d), an explanation is given on the case where the BD equipment region code 230a is "2", the DVD equipment region code 230b is "2", the BD region codes 110 are "1" and "3", and the DVD region codes 120 are "2" and "3". In this case, since it is judged that the BD equipment region code 230a does not match each of the plurality of BD region codes 110, the data recorded in the BD layer L0 is not reproduced. After it is judged that the BD equipment region code 230a does not match each of the plurality of BD region codes 110, it is judged that the DVD equipment region code 230b matches one of the plurality of DVD region codes 120 (specifically, code "2"). Thus, the data recorded in the DVD layer L1 is reproduced.

Moreover, in FIG. 4(a) to FIG. 4(d), an explanation was given on the case where the BD equipment region code 230a is equal to the DVD equipment region code 230b; however, it will be understood that the BD equipment region code 230a and the DVD equipment region code 230b may have different values.

For example, as shown in FIG. 4(e), an explanation is given on the case where the BD equipment region code 230a is "3", the DVD equipment region code 230b is "1", the BD region code 110 is "1", and the DVD region code 120 is "1". In this case, since it is judged that the BD equipment region code 230a does not match the BD region code 110, the data recorded in the BD layer L0 is not reproduced. After it is judged that the BD equipment region code 230a does not match the BD region code 110, it is judged that the DVD equipment region code 230b matches the DVD region code 120. Thus, the data recorded in the DVD layer L1 is reproduced.

As explained above, according to the information reproducing apparatus 200 in the embodiment, even if the data recorded in the BD layer L0 cannot be reproduced because the BD region code 110 does not match the BD equipment region code 230a, the data recorded in the DVD layer L1 can be reproduced by further judging whether or not the DVD region code 120 matches the DVD equipment region code 230b. In other words, if the data recorded in the BD layer L0 cannot be reproduced, it is judged, so-called automatically, whether or not the data recorded in the DVD layer L1 can be reproduced. Thus, it is possible to preferably eliminate such a disadvantage that the reproduction operation is ended due to the fact that the BD region code 110 does not match the BD equipment region code 230a. By this, it is possible to preferably eliminate such a disadvantage that the data recorded on the hybrid type optical disc 100 cannot be reproduced at all. That is, according to the information reproducing apparatus 200 in the embodiment, it is possible to preferably perform the reproduction on the hybrid type optical disc 100 provided with the plurality of types of recording layer to each of which the region code is assigned.

Moreover, after it is judged that the BD region code 110 does not match the BD equipment region code 230a, it is judged whether or not the DVD region code 120 matches the DVD equipment region code 230b. That is, although the data recorded in the BD layer L0 is firstly to be reproduced, it is judged whether or not the data recorded in the DVD layer L1 can be reproduced if the data recorded in the BD layer L0 cannot be reproduced. Thus, a user can watch high-quality contents, such as HD (High Definition) contents recorded in the BD layer L0 in principle. On the other hand, if the user cannot watch the high-quality contents, the user can watch standard-quality contents, such as SD (Standard Definition) contents, recorded in the DVD layer L1.

Incidentally, in the step S104 in FIG. 3, if it is judged that the BD region code 110 does not match the BD equipment region code 230a, a warning screen which indicates that the BD region code 110 does not match the BD equipment region code 230a may be displayed before the obtainment of the DVD region code 120 recorded in the DVD layer L1. In other words, a warning screen which indicates that the data recorded in the BD layer L0 cannot be reproduced may be displayed.

At this time, a display screen for requesting the user to judge whether or not to reproduce the data recorded in the DVD layer L1 may be further displayed. Then, if the user gives an instruction to reproduce the data recorded in the DVD layer L1 using the input device 210, the DVD region code 120 recorded in the DVD layer L1 may be obtained. On the other hand, if the user gives an instruction not to reproduce the data recorded in the DVD layer L1 using the input device 210, the reproduction operation may be ended without obtaining the DVD region code 120 recorded in the DVD layer L1. By this, when the user does not want to reproduce the data recorded in the DVD layer L1, it is unnecessary to continue the reproduction operation.

Incidentally, in the aforementioned embodiments, the optical disc 100 is explained as one example of the information recording medium, and the player related to the optical disc 100 is explained as one example of the information reproducing apparatus. The present invention, however, is not limited to the optical disc and the player thereof, and can be applied to other various information recording media which support high-density recording or a high transfer rate, and players thereof.

The present invention is not limited to the aforementioned embodiment, but various changes may be made, if desired, without departing from the essence or spirit of the invention which can be read from the claims and the entire specification. An information reproducing apparatus and method, and a computer program, all of which involve such changes, are also intended to be within the technical scope of the present invention.

### Industrial Applicability

The information reproducing apparatus and method, and the computer program according to the present invention can be applied to an information reproducing apparatus, such as a DVD player and a Blu-ray Disc player. Moreover, they can be applied to an information reproducing apparatus or the like which is mounted on various computer equipment for consumer use or for commercial use, or which can be connected to various computer equipment.

## Claims

1. An information reproducing apparatus comprising:
a reproducing device for reproducing record information recorded on an information recording medium, the information recording medium comprising a first recording layer (BD layer) to which first medium region information is assigned and a second recording layer (DVD layer) to which second medium region information is assigned;
a storing device for storing apparatus region information;
a first judging device for judging whether or not the second medium region information matches the apparatus region information if the first medium region information does not match the apparatus region information; and
a first controlling device for controlling said reproducing device to reproduce the record information recorded in the second recording layer if it is judged that the second medium region information matches the apparatus region information.

2. The information reproducing apparatus according to claim 1, further comprising:
a second judging device for judging whether or not the first medium region information matches the apparatus region information; and
a second controlling device for controlling said reproducing device to reproduce the record information recorded in the first recording layer if it is judged that the first medium region information matches the apparatus region information.

3. The information reproducing apparatus according to claim 2, wherein said first judging device judges whether or not the second medium region information matches the apparatus region information after said second judging device judges whether or not the first medium region information matches the apparatus region information.

4. The information reproducing apparatus according to claim 2, wherein said second judging device is realized by that a program recorded on the information recording medium is executed on said information reproducing apparatus.

5. The information reproducing apparatus according to claim 1, wherein
a plurality of first medium region information is assigned to the first recording layer, a plurality of second medium region information is assigned to the second recording layer,
said first judging device judges whether or not at least one of the plurality of second medium region information matches the apparatus region information if each of the plurality of first medium region information does not match the apparatus region information, and
said first controlling device controls said reproducing device to reproduce the record information recorded in the second recording layer if it is judged that at least one of the plurality of second medium region information matches the apparatus region information.

6. The information reproducing apparatus according to claim 1, wherein instructing device for giving an instruction of whether or not to reproduce the record information recorded in the second recording layer if it is judged that the second medium region information matches the apparatus region information, and
said first controlling device controls said reproducing device to reproduce the record information recorded in the second recording layer if an instruction to reproduce the record information recorded in the second recording layer is given.

7. An information reproducing method in an information reproducing apparatus comprising: a reproducing device for reproducing record information recorded on an information recording medium, the information recording medium comprising a first recording layer to which first medium region information is assigned and a second recording layer to which second medium region information is assigned; and a storing device for storing apparatus region information,
said information reproducing method comprising:
a first judging process of judging whether or not the second medium region information matches the apparatus region information if the first medium region information does not match the apparatus region information; and
a first controlling process of controlling said reproducing device to reproduce the record information recorded in the second recording layer if it is judged that the second medium region information matches the apparatus region information.

8. A computer program for record control to control a computer provided for said information recording apparatus according to claim 1, said computer program making the computer function as at least one portion of said first judging device and said first controlling device.
